# FASCICULE DE BREVET EUROPEEN

(11) **EP 3 980 354 B1**
(45) Date de publication et mention de la délivrance du brevet: **28.08.2024**
(21) Numéro de dépôt: 20742799.8
(22) Date de dépôt: 05.06.2020
(51) Int. Cl.: B65F 1/02, B65F 1/16, G06V 20/52, B65F 1/14

(54) **ENSEMBLE DE COLLECTE DE DÉCHETS**
ABFALLSAMMEL-SET
WASTE COLLECTION SET

(30) Priorité: 07.06.2019 FR 1906106
(43) Date de publication de la demande: 13.04.2022
(73) Titulaire: Suez International, 92040 Paris La Défense Cedex (FR)
(72) Inventeur: CHARLET, Franck, 92100 Boulogne Billancourt (FR)
(74) Mandataire: Lavoix
(86) Numéro de dépôt international: PCT/FR2020/050959
(87) Numéro de publication internationale: WO 2020/245547

(56) Documents cités:
- EP-A1- 2 765 540
- KR-A- 20170 017 652
- US-A1- 2009 161 907
- US-B1- 10 035 647

## Description

L'invention concerne un ensemble de collecte de déchets et plus précisément un ensemble adapté pour permettre la détection automatique de dépôts sauvages de déchets au pied d'un conteneur d'apport volontaire.

Dans le domaine de la collecte de déchets, il est bien connu de l'homme du métier que l'installation de conteneur d'apport volontaire, aussi connu sous son abréviation CAV, permet d'optimiser la collecte de déchets, d'en réduire le coût et incite au tri sélectif.

Toutefois un problème connu est qu'il est fréquent que des dépôts sauvages de déchets soient effectués au pied de ces conteneurs.

Ainsi, lors des tournées de collectes de déchets, il est fréquent que les opérateurs de collecte soient obligés dans un premier temps de retirer les déchets alentours.

Une telle problématique relève en outre de la qualité du tri effectuée de manière active par les usagers, car ces déchets ne sont pas correctement triés.

Pour résoudre les problématiques de tri, on connaît des solutions de l'art antérieur telles que le document FR3036107 A1 qui décrit un camion benne, embarquant une caméra pour détecter si les déchets collectés sont correctement triés ou non. Toutefois une telle solution ne permet pas de détecter les dépôts sauvages de déchets au pied des conteneurs. Le document US 10 035 647 B1 divulgue toutes les caractéristiques du préambule de la revendication 1 annexée.

Il existe plusieurs catégories de solutions à ce type de problème : répressives, par exemple par l'établissement de contraventions ; préventives, par des campagnes de sensibilisation ; ou encore curative, par une détection de ces déchets déposés de manière sauvage.

La détection, à but curatif, de ce type de déchets est relativement coûteuse, car elle nécessite généralement le passage fréquent d'agents de collecte, pour nettoyer les abords des conteneurs d'apport volontaire de déchets sauvages qui y sont déposés.

Aussi, il existe le besoin d'une solution plus performante pour détecter les déchets sauvages déposés aux abords des conteneurs d'apport volontaire.

A cet effet, on propose un ensemble de collecte de déchets, comprenant un conteneur d'apport volontaire pour recevoir des déchets.

L'ensemble comprend au moins un moyen d'acquisition d'images positionné et orienté de sorte à pouvoir capter au moins une image d'au moins une zone du sol au voisinage dudit conteneur d'apport volontaire,
ledit ensemble comprenant en outre un dispositif de détection apte à recevoir ladite au moins une image du moyen d'acquisition d'images et à détecter dans ladite au moins une image la présence d'un déchet au sol.

Ainsi, on peut obtenir un ensemble de détection de déchets permettant la détection automatique de déchets déposés de manière sauvage au pied d'un conteneur d'apport volontaire.

On entend par le terme *au voisinage,* une distance allant jusqu'à 10 mètres du conteneur d'apport volontaire, notamment d'une paroi latérale externe dudit conteneur et en particulier une distance allant jusqu'à 2 mètres du conteneur d'apport volontaire, notamment d'une paroi latérale externe dudit conteneur.

Selon l'invention, ledit conteneur d'apport volontaire comprend au moins une paroi latérale externe reposant à une extrémité au sol, ledit moyen d'acquisition d'images étant fixé à ladite paroi latérale externe, de sorte à capter des images d'une zone du sol au voisinage de ladite extrémité reposant au sol.

Ainsi, le moyen d'acquisition d'image est bien intégré au conteneur d'apport volontaire, et permet notamment de mettre en place de manière relativement simple un tel ensemble, le moyen d'acquisition d'images pouvant être prépositionné sur le conteneur avant son installation sur le site de collecte de déchets.

Avantageusement et de manière non limitative, ledit conteneur d'apport volontaire comprend une pluralité de paroi latérales externes, chaque paroi latérale externe reposant à une extrémité au sol, caractérisé en ce que l'ensemble de collecte comprend, pour chaque paroi latérale externe un moyen d'acquisition d'images fixé à la paroi latérale externe associée, chaque moyen d'acquisition d'images étant adapté pour capter des images d'une zone du sol au voisinage de ladite extrémité respective reposant au sol de ladite paroi latérale externe associée. Ainsi, on peut capter des images pour tout le pourtour du conteneur d'apport volontaire, ce qui permet d'améliorer et de rendre plus fiable la détection automatique de déchets.

Avantageusement et de manière non limitative ledit dispositif de détection comprend des moyens de :
- recomposition d'une image unique d'ensemble de la zone alentour du conteneur d'apport volontaire à partir des images captées par chaque moyen d'acquisition d'images, sensiblement à un même instant d'acquisition; et
- de reconnaissance dans ladite image unique d'au moins un déchet.

Ainsi, on peut rendre encore plus performant la détection de déchets, en précalculant une image unique de l'environnement proche au sol du conteneur d'apport volontaire et en détectant dans cette image unique la présence de déchets. Ceci permet en outre de réduire la quantité de calcul de détection à effectuer.

Avantageusement et de manière non limitative, ledit dispositif de détection comprend un terminal distant et un concentrateur, ledit concentrateur étant installé dans ledit conteneur d'apport volontaire et étant adapté pour recevoir ladite au moins une image du moyen d'acquisition d'image et à la transmettre, via un réseau de communication, audit terminal distant. Ainsi, le terminal distant peut être installé loin du conteneur d'apport volontaire, et notamment le terminal distant peut ainsi être un dispositif de calcul performant branché sur un réseau électrique, le concentrateur permettant de transmettre les images acquises, la détection étant mise en oeuvre de cette manière hors du conteneur d'apport volontaire. Ainsi, la consommation énergétique dans le conteneur d'apport volontaire, généralement non relié à un réseau électrique, est mieux maîtrisée.

Selon une alternative présentant d'autres avantages, et de manière non limitative, ledit dispositif de détection est installé dans ledit conteneur d'apport volontaire, ledit dispositif de détection étant connecté à chaque moyen d'acquisition d'images. Ainsi, les calculs de détection peuvent être réalisés directement dans le conteneur d'apport volontaire, ce qui permet en particulier de réduire la quantité de données à transmettre via les réseaux de télécommunication, les images n'étant pas, dans ce cas, envoyé à un terminal distant.

L'invention concerne aussi un procédé de détection de déchets dans un ensemble de collecte de tel que décrit précédemment.

Le procédé comprend des étapes de :
- Déclenchement de l'acquisition d'au moins une image par au moins un moyen d'acquisition d'images ;
- Acquisition de ladite image par ledit moyen d'acquisition d'images ;
- Détection dans ladite image de la présence d'un déchet
- Émission d'un signal d'alerte lorsqu'un déchet est détecté dans ladite image.

Ainsi, on peut mettre en oeuvre de manière relativement efficace la détection de déchets au pied d'un conteneur d'apport volontaire.

Avantageusement et de manière non limitative, ladite étape de détection comprend la mise en oeuvre d'un module d'apprentissage automatique supervisé de classification, entraîné en fonction d'une base de données d'entraînement comprenant des couples d'images prédéfinies associée chacune à une valeur d'indication de présence ou d'absence d'un déchet dans ladite image. Ainsi, on peut obtenir une détection fiable et robuste des déchets au pied d'un conteneur d'apport volontaire.

Avantageusement et de manière non limitative, ledit module d'apprentissage automatique comprend un réseau de neurone convolutif, comprenant :
- au moins une étape de convolution d'une image d'entrée ;
- au moins une étape de sous-échantillonnage de l'image calculée en sortie de l'étape de convolution ; et
- au moins une étape Entièrement Connectée, comprenant la mise en oeuvre d'un réseau de neurone artificiel, pour classifier l'image obtenue en sortie de l'étape de sous-échantillonnage.

Ainsi, on peut obtenir une détection encore plus fiable et robuste des déchets au pied d'un conteneur d'apport volontaire.

Avantageusement et de manière non limitative, le procédé comprend en outre une étape de reconstruction d'une image unique en fonction de chaque image acquise par chaque moyen d'acquisition d'image ; ledit procédé de détection étant mis en oeuvre en fonction de ladite image unique reconstruite. Ainsi on peut rendre plus performant, plus robuste et plus rapide le procédé de détection.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1a] est une vue de côté d'un ensemble de collecte de déchets selon un premier mode de réalisation de l'invention ;
[Fig. 1b] est une vue du dessus d'un ensemble de collecte de déchets selon le mode de réalisation de la figure 1a;
[Fig. 1c] est une vue de détail d'une caméra d'un ensemble de collecte de déchets selon le mode de réalisation de la figure 1a;
[Fig. 2] est une vue de côté d'un ensemble de collecte de déchets selon un deuxième mode de réalisation de l'invention;
[Fig. 3] est un organigramme d'un procédé de détection de déchets dans un ensemble de collecte de déchets selon l'invention ; et
[Fig. 4] est une vue de côté d'un ensemble de collecte de déchets selon un troisième mode de réalisation de l'invention.
Selon un premier mode de réalisation de l'invention, en référence à la figure 1a, un ensemble de collecte de déchets 1 comprend un conteneur d'apport volontaire 10, aussi appelé conteneur 10, 10', des moyens d'acquisition d'images 111-114 et un dispositif de détection de déchets 20.

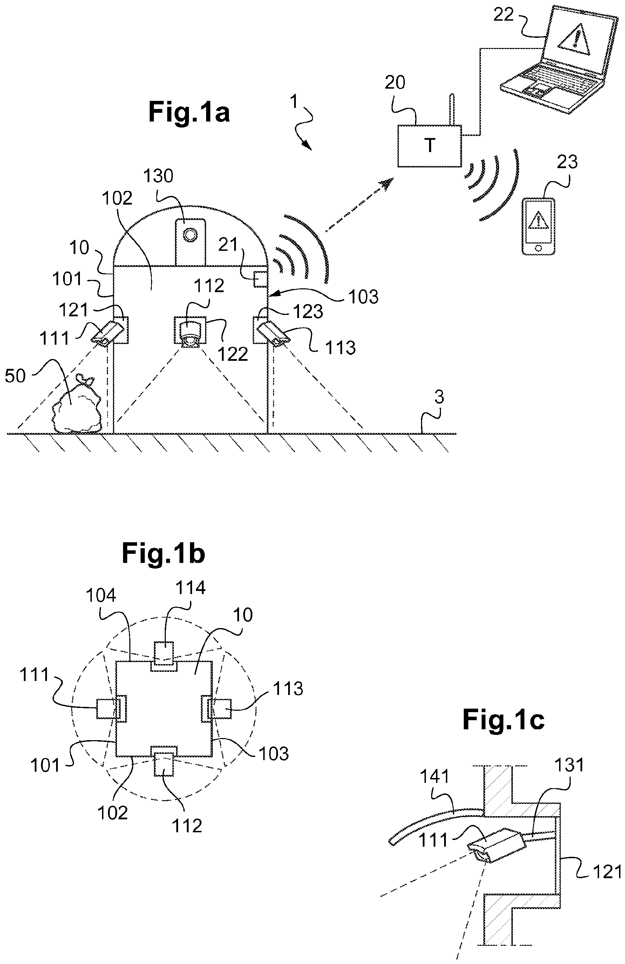

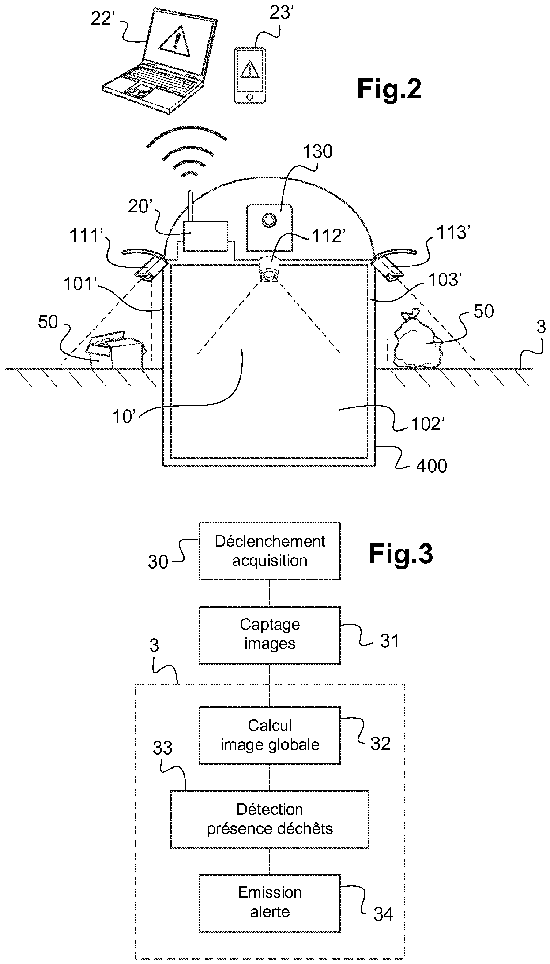

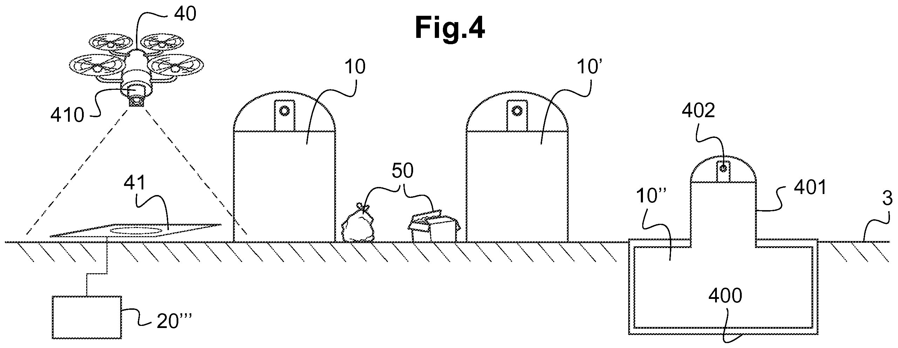

On connaît notamment dans l'art antérieur trois types distincts de conteneurs d'apport volontaire 10, 10', 10"
- des conteneurs d'apport volontaire aériens 10, tel que celui représenté figure 1a, reposant entièrement sur le sol 3, une bouche de collecte 130 étant réalisée directement sur une paroi du conteneur 10 ;
- des conteneurs d'apport volontaire semi-enterrés 10', tel que celui représenté figure 2, installés pour partie dans un cuvelage souterrain, généralement un cuvelage bétonné, et s'étendant pour l'autre partie en saillie supérieure verticale du sol 3, une bouche de collecte 130 étant réalisée directement sur une paroi du conteneur 10 en saillie supérieure verticale du sol 3 ; et
- des conteneurs d'apport volontaire enterrés 10", tel que celui représenté en figure 4, entièrement installés dans un cuvelage souterrain 400, généralement bétonné, et présentant une borne d'apport 401, en saillie verticale externe du sol 3 sur laquelle est formée une bouche d'apport 402.

L'invention peut être mise en oeuvre pour n'importe quel type de conteneur d'apport volontaire 10, 10', 10" connu, nonobstant des adaptations structurelles qui seront décrites ci-après.

Un conteneur d'apport volontaire 10-10" comprend une ou plusieurs parois latérales externes 101-104 formant enveloppe externe du conteneur 10, 10', dans le cas des conteneurs aériens ou semi-enterrés, ou de la borne d'apport 401 dans le cas d'un conteneur enterré 10".

En d'autre terme on entend par parois latérales externes 101-104 l'ensemble des parois 101-104 s'étendant au dessus du sol 3, et formant enveloppe extérieure du conteneur ou de sa borne d'apport 401.

Un conteneur d'apport volontaire 10-10" présente fréquemment une forme vue du dessus carrée ou rectangulaire. Dans ce type de configuration, le conteneur d'apport volontaire 10-10" comprend alors quatre parois latérales externes 101-104.

Compte tenu de la représentation schématique des figures en vue de côté, seules trois parois 101-104 parmi les quatre sont représentées.

Il arrive aussi que le conteneur d'apport volontaire 10-10" présente une forme vue du dessus sensiblement circulaire. Dans ce cas, le conteneur 10-10" est composé d'une unique paroi latérale externe circulaire. Afin d'adapter ce type de conteneur de forme circulaire à l'invention, qui se référera dans sa description à une pluralité de parois latérales externes, on pourra subdiviser l'unique paroi latérale externe courbe en quatre, six ou huit, portions de la paroi latérale externe, chaque portion étant alors assimilée à une paroi latérale externe indépendante. La grandeur de subdivision étant effectuée par l'homme du métier en fonction du diamètre du conteneur 10-10", plus le diamètre sera grand, plus on choisira un nombre de portions de subdivision important.

Dans le premier mode de réalisation de l'invention, en référence à la figure 1a, le conteneur 10 comprend quatre parois latérales externes 101-104.

Chaque paroi latérale externe 101-104 comprend un organe de fixation d'un moyen d'acquisition d'images 111-114.

Dans ce mode de réalisation, chaque paroi latérale externe 101-104 comprend une cavité 121-123. Cette cavité 121-123 permet d'assurer une meilleure intégration des moyens d'acquisition d'images 111-114 aux parois latérales externes, en particulier en limitant leur saillie externe et en les protégeant notamment des intempéries.

Chaque cavité 121-123, représenté en détail figure 1c, comprend des moyens de fixation 131 pour solidariser un moyen d'acquisition d'image 111, ici une caméra 111.

Ces moyens de fixations peuvent être librement choisis par l'homme du métier, afin de fixer de manière robuste une caméra ou tout autre dispositif d'acquisition d'images à une paroi externe du conteneur.

En outre, dans ce mode de réalisation, mais de manière optionnelle, un haut-vent 141 peut être installé en surplomb de la cavité de sorte à améliorer la protection de la caméra aux intempéries.

Selon un mode de réalisation alternatif non représenté, les moyens d'acquisition d'images 111-114 peuvent être directement montés sur la paroi latérale externe associée 101-104 sans qu'il ne soit nécessaire qu'une cavité n'y soit formée. Dans ce mode de réalisation alternatif, on installera alors préférentiellement une demi-sphère transparente, ou tout autre moyen de protection, sur le moyen d'acquisition d'images afin de le protéger des intempéries et de toute dégradation volontaire ou involontaire.

Chaque caméra 111-114 est agencée de sorte à capter dans son champ de vision, une portion du sol 3 au voisinage de la paroi latérale externe 101-104 associée. En d'autre terme, la caméra 111-114 est orientée de sorte à capter des images au pied de chaque paroi latérale externe 101-104.

On entend par le terme *au voisinage,* une distance allant jusqu'à 10 mètres de la paroi latérale externe 101-104, et en particulier une distance allant jusqu'à 2 mètres de la paroi latérale externe 101-104.

A cet effet la caméra 111-114 est ici une caméra à grand angle, ici en particulier une caméra à objectif hypergone, aussi connue sous le nom d'objectif « fish-eye », présentant un angle de champ compris entre 120° et 180°. En effet, le procédé de détection décrit ci-après est réalisé de sorte que la déformation d'image apportée par un tel objectif n'impacte que très faiblement la détection des déchets.

Les caméras, ainsi orientées en oblique vers le sol sur chaque côté du conteneur d'apport volontaire, sont préférentiellement installées à une hauteur relativement basse, par exemple de 50cm à 1m du sol 3, de sorte à ne pas filmer d'éventuelles personnes présentent aux abords du conteneur 10, ce qui permet d'éviter une collecte d'informations personnelles non voulue.

Ainsi, lorsqu'un déchet 50 est déposé au sol au voisinage d'une paroi latérale externe 101, autrement dit au pied de la paroi latérale externe 101, la caméra 111 est ainsi agencée pour pouvoir capter une image du déchet 50.

Afin de détecter de manière automatique la présence d'un 50 ou plusieurs déchets au sol, au voisinage du conteneur d'apport volontaire 10, le système 1 comprend aussi un dispositif de détection 20 adapté pour à recevoir au moins une image des caméras 111-114 et à détecter dans l'image la présence d'un déchet.

Dans ce mode de réalisation le dispositif de détection 20,21 comprend un concentrateur 21 et un terminal distant 20.

Le terminal distant 20 est adapté pour communiquer avec le concentrateur 21 de sorte que les caméras 111-114 transmettent les images acquises au concentrateur 21 qui les émet alors au terminal distant 20 par une liaison de télécommunication ; ici une liaison sans-fil, par exemple par réseau cellulaire, GSM, satellitaire, ou par réseau local sans fil tel que via une technologie Wifi ou Bluetooth ou de manière alternative par réseau filaire, par exemple par réseau Ethernet, coaxial, par réseau téléphonique, par fibre optique, ou par tout autre réseau filaire.

Cet agencement du dispositif de détection 20,21 permet de limiter la consommation énergétique des équipements installés dans le conteneur d'apport volontaire, lequel ne comprend généralement par de connexion à un réseau d'alimentation électrique.

Ainsi, le terminal distant 20, qui met en oeuvre le procédé de détection décrit ci-après, en référence à la figure 3, par exemple un ordinateur on un serveur, est installé branché sur un réseau d'alimentation électrique, ce qui permet de s'affranchir de la contrainte de la consommation énergétique.

La consommation électrique sur le conteneur d'apport volontaire est alors limitée à l'alimentation des caméras 111-114 et à l'émission de données par le concentrateur 21.

Dans un mode de réalisation alternatif d'un ensemble comprenant une pluralité de conteneur d'apport volontaire 10, Un premier conteneur 10 de cette pluralité peut comprendre un concentrateur 21, les autres conteneurs 10 de cette pluralité étant connectés à ce concentrateur par des moyens de communication, tels qu'une connexion sans fil, par exemple Wifi, Bluetooth ou cellulaire, ou par un réseau filaire, par exemple un réseau Ethernet. De cette manière les autres conteneurs 10 de la pluralité ne comprennent pas de concentrateur, ce qui permet de mutualiser les moyens techniques mis en oeuvre et optimiser la consommation énergétique de l'ensemble.

L'acquisition d'images 31 par les caméras 111-114 est dans ce mode de réalisation déclenchée 30 à intervalle régulier, par exemple toutes les heures, ou à toute autre fréquence pouvant être déterminée par l'homme du métier afin d"optimiser la consommation électrique du conteneur d'apport volontaire. On peut par exemple prévoir d'effectuer un unique déclenchement 30 de l'acquisition 31 par jour, soit toutes les 24 heures, si la nécessité d'une détection à court terme n'est pas critique.

On réalise une acquisition d'image simultanée, ou consécutive, par chaque caméra 111-114. Autrement dit, lorsqu'une caméra 111 acquiert un image, elle effectue cette acquisition soit en même temps que les autres caméras 112-114 soit à bref délai, par exemple dans un intervalle inférieur à 10 secondes, avant ou après une autre caméra, de sorte que toutes les caméras acquièrent une image dans un espace de temps réduit.

L'acquisition d'image 31 est déclenchée 30 pour chaque caméra 111-114 par le concentrateur 21, ici muni d'une horloge interne, qui attend en retour l'image acquise.

Selon une alternative de mise en oeuvre de l'invention, le déclenchement 30 de l'acquisition d'image peut être réalisée différemment, par exemple, on peut coupler chaque caméra 111-114 avec un capteur de présence non représenté, par exemple un capteur infra-rouge ou un capteur ultrason, apte à détecter l'approche d'un corps étranger au voisinage du conteneur d'apport volontaire 101-104 et à déclencher 30 l'acquisition d'images.

Lorsque le concentrateur 21 a reçu les images de chaque caméra 111-114, il procède alors à une transmission de toutes ces images au terminal distant 20 qui met ensuite en oeuvre un procédé 3 de détection de déchets.

Le terminal distant 20 procède dans un premier temps à une étape de reconstruction d'une image unique à partir des images acquises par chaque caméra 111-114.

Dans ce mode de réalisation, le conteneur d'apport volontaire 10 comprend quatre caméras, aussi l'image unique est la combinaison de quatre images distinctes.

La reconstruction de l'image unique à partir des quatre images distinctes provenant de caméras grand angles, est connue sous le nom d'assemblage d'images ou en anglais *Image Stitching.* On pourra à cet effet employer un procédé d'assemblage d'images connu de l'art antérieur.

Compte tenu de l'orientation des photos et de leur angle de champs important, l'image reproduite aura un aspect sensiblement circulaire en vue du dessus du conteneur d'apport volontaire, type de vue connue en anglais sous le nom de *Bird View,* que l'on traduit en français comme étant une vue d'oiseau.

Cette image unique comprend aussi une partie centrale vide, correspondant à l'espace occupé par le conteneur d'apport volontaire 10, l'image correspondant dont à une vue du sol 3 alentour du conteneur d'apport volontaire 10, connu en anglais sous le nom de *Surround View.*

Une fois l'image unique calculée, on procède alors à une étape de détection 33 de déchets dans l'image.

Dans ce mode de réalisation de l'invention, l'étape de détection 33 est mise en oeuvre par un module d'apprentissage automatique du procédé de détection 3.

Le module d'apprentissage automatique est dans ce mode de réalisation un réseau de neurones artificiels, en particulier un réseau de neurone convolutif, fréquemment nommés d'après leur abréviation anglophone CNN pour *Convolutional Neural Networks.* Toutefois d'autres types de réseaux de neurones peuvent aussi être adaptées à une telle détection, tels que les perceptrons multicouches, en anglais *Multilayer Perceptron.*

Le module d'apprentissage automatique est mis en oeuvre dans le but d'effectuer une classification des images analysées.

Le module d'apprentissage automatique est ici un module à apprentissage supervisé.

Par conséquent, dans une étape préliminaire, le module d'apprentissage automatique est entraîné à partir d'une base d'entraînement comprenant une pluralité d'images d'apprentissage associées à la classe à laquelle elle appartient, « image en présence d'au moins un déchet » ou « image en l'absence de déchet ».

Le réseau de neurone convolutif selon l'invention peut par exemple être structuré selon un modèle *LeNet,* par exemple *LeNet-5,* bien connu dans le domaine de l'apprentissage automatique, qui comprend des couches de :
- Convolution de l'image d'entrée, consistant en l'application d'une matrice de convolution à l'image d'entrée, « *filtrant* » l'image de sorte à isoler des éléments pertinents ; une matrice de convolution permettant l'obtention de contours peut par exemple être appliquée, tel qu'un Filtre de Canny, connu en anglais sous le nom de *Canny Edge Detector ; et de*
- *Pooling,* qui représente en d'autres termes un sous-échantillonnage de l'image filtrée.

En fonction de la résolution de l'image ces couches pourront être répétées une pluralité de fois, et les filtres de convolution peuvent varier selon le niveau de répétition de la couche de convolution, de sorte à obtenir en sortie une image de taille faible qui sera ensuite soumise à au moins une couche dite Entièrement Connectée, en anglais *Fully-Connected,* permettant la classification finale de l'image obtenue en entrée.

Il est bien connu de l'homme du métier de l'apprentissage automatique que chaque couche peut être séparée de la suivante par une couche intercalée dite couche de correction, ou *ReLU,* de l'anglais *Rectified Linear Unit,* appliquant une fonction dite d'activation pouvant être choisie par l'homme du métier parmi les fonctions d'activation connues telles que, à titre non limitatif, la fonction max, une sigmoïde ou encore une fonction tangente hyperbolique.

Il est connu de l'homme du métier que l'étape d'entraînement d'un module d'apprentissage automatique comprend une étape d'application d'une image d'entraînement en entrée du réseau de neurones, qui génère un résultat de classification en sortie, puis une étape de rétro-propagation, en anglais Back Propagation, mettant généralement en oeuvre une approche dite de descente du gradient, ou algorithme du gradient, plus fréquemment appelé sous son nom anglais *Gradient Descend,* en particulier dans la couche dite Entièrement Connectée, afin de pondérer l'erreur de chaque neurone, en fonction notamment de la sortie attendue, et connue, associée à l'image d'entraînement.

Le paramétrage de la rétro-propagation est une approche empirique dont le paramétrage est fonction des images d'entrée, des résultats obtenus et attendus ainsi que du contexte d'acquisition des images, que l'homme du métier saura adapté au cas particulier. En particulier, il est bien connu que la rétro-propagation dans un réseau de neurone multicouche nécessite des adaptations par l'homme du métier, afin d'obtenir un résultat optimal, qui ne peuvent être généralisées.

Ainsi, après avoir procédé à une étape préliminaire d'entraînement du module d'apprentissage automatique, on procède à l'étape de détection de l'image unique calculée, de sorte à classer cette image parmi les deux classes prédéfinies « image en présence d'au moins un déchet » ou « image en l'absence de déchet ».

Le procédé d'apprentissage peut, selon une alternative être adapté pour permettre la classification dans un plus grand nombre de classes distinctes, par exemple de sorte à comptabiliser le nombre de déchets sur l'image. Autrement dit, le procédé serait adapté pour classifier l'image dans un ensemble de classes de type « N-déchets », N étant un entier naturel.

Le procédé de détection peut aussi être réalisé selon d'autres techniques. Notamment, la détection peut être réalisée par application d'un procédé d'apprentissage automatique de régression. Ainsi, on pourrait par exemple estimer le taux d'encombrent au sol, sur l'image, par des déchets.

Selon une autre alternative de mise en oeuvre, l'étape de détection 33 peut être réalisé par un module d'analyse d'image conventionnelle, par exemple par application de de fonction de convolution tel qu'exposé précédemment, par exemple par seuillage de l'image et détection d'un contour inattendu. Ce procédé d'analyse d'image peut notamment être relativement performant pour des environnements simples dans lequel le sol est d'aspect relativement uniforme en l'absence de déchets.

Lorsque le terminal 20 détecte la présence d'au moins un déchet sur l'image unique, il génère alors un signal d'alerte, par exemple l'émission d'un message visuel sur un écran d'ordinateur 22, ou encore l'émission d'une alerte sur un smartphone 23, par exemple un message de type Push, mais selon des mises en oeuvre particulières, le terminal 20 peut aussi inscrire l'alerte, notamment horodatée, dans une base de données, permettant d'effectuer a posteriori une analyse statistique.

Ainsi l'émission d'un tel signal d'alerte permet par exemple de déclencher un ordre de service, ordonnant l'envoi d'une équipe de ramassage, d'un camion de collecte, ou encore d'un robot de ramassage, par exemple un drone de ramassage.

Selon un mode de réalisation particulier de l'invention, l'étape de détection est adaptée pour détecter en outre la taille de chaque déchet présent dans l'image. Ainsi, en fonction de la taille des déchets détectés dans l'image, le signal d'alerte pourra déclencher une intervention de ramassage différente, par exemple l'envoi d'un drone de ramassage pour des déchets de tailles réduites et l'envoi d'un camion de collecte pour des déchets plus volumineux.

Selon un deuxième mode de réalisation, en référence à la figure 2, un ensemble 1 comprend un conteneur d'apport volontaire 10' semi-enterré, comprenant comme pour le premier mode de réalisation, quatre parois latérales externes 101'-103', la quatrième paroi n'était pas représentée, et pour chaque paroi latérale un organe d'acquisition d'images 111-114.

Le deuxième mode de réalisation diffère du premier mode de réalisation de l'invention en ce que le dispositif de détection 20' est intégré dans le conteneur d'apport volontaire. Ainsi, le procédé de détection 3 est mis en oeuvre sans transmission préalable des images acquises par un concentrateur.

Autrement dit le dispositif de détection 20' combine la fonction de concentrateur pour recevoir les images et de dispositif pour mettre en oeuvre le procédé de détection.

L'avantage de ce deuxième mode de réalisation est de limiter la transmission de données via le réseau de télécommunication sans fil. Ainsi, un unique message de détection peut être transmis à un ordinateur distant 22' ou à un smartphone 23', par exemple par des réseaux de télécommunication à faible bande passante, ou à faible capacité de données, tel qu'un réseau de type LoRa, Sigfox ou tout autre réseau adapté. Toutefois, la consommation énergétique associée au dispositif de détection 20' dans le conteneur d'apport volontaire 10' est plus importante que dans le premier mode de réalisation.

Selon un mode de réalisation non revendiqué, et alternatif de l'invention, selon la figure 4, l'ensemble comprend une pluralité de conteneurs d'apport volontaires 10-10", et un drone 40, comme moyen d'acquisition d'images, associé à une base de rechargement 41.

Le drone 40 comprend au moins une caméra 410 installé de sorte à capter des images du sol 3 lorsque le drone est en vol.

Le drone 40 est adapté pour survoler chaque conteneur 10-10" de l'ensemble et à acquérir pour chacun une image alentour du type *Bird View,* par exemple par emploi d'une caméra hypergone, ou par acquisition consécutive d'une pluralité d'images distinctes reconstituées, tel que décrit précédemment.

Le drone 40 peut être activé, pour réaliser le survol, soit par la présence de détecteur de présence pour chaque conteneur 10-10", soit à intervalle prédéfini, par exemple une fois par jour.

Le drone 40 est ensuite adapté pour se poser sur une base de rechargement 41 de l'ensemble, permettant de recharger ses batteries d'accumulateurs électrique. La base de rechargement 41 étant en outre associée, par exemple par communication sans fil à courte portée, telle que du Bluetooth, du Wifi ou encore du RFID, ou par communication filaire, avec le dispositif de détection 20'".

Selon une autre alternative de réalisation la base de rechargement 41 peut comprendre un concentrateur, tel que décrit pour le premier mode de réalisation, pour transmettre les images acquises à un terminal distant.

Selon un autre mode de réalisation non revendiqué, et alternatif de l'invention, non représenté, dans lequel l'ensemble comprend un conteneur d'apport volontaire, l'ensemble comprend en outre une caméra installée sur un mat, en surplomb du conteneur, de sorte à capter des images du sol au voisinage du conteneur. Ainsi le mat permet d'obtenir une image prise à distance verticale du sommet du conteneur d'apport volontaire, de sorte à obtenir simplement une image de type Bird View.

## Revendications

1. Ensemble (1) de collecte de déchets, comprenant un conteneur d'apport volontaire (10, 10', 10") pour recevoir des déchets et au moins un moyen d'acquisition d'images (111-114) positionné et orienté de sorte à pouvoir capter au moins une image d'au moins une zone du sol (3) au voisinage dudit conteneur d'apport volontaire (10, 10', 10"),
ledit ensemble (1) comprenant en outre un dispositif de détection (20,21) apte à recevoir ladite au moins une image du moyen d'acquisition d'images (111-114) et à détecter dans ladite au moins une image la présence d'un déchet (50) au sol (3) ;
ledit conteneur d'apport volontaire (10, 10', 10") comprend au moins une paroi latérale externe (101-104) reposant à une extrémité au sol (3), **caractérisé en ce que** ledit moyen d'acquisition d'images (111-114) est fixé à ladite paroi latérale externe (101-104) de sorte à capter des images d'une zone du sol (3) au voisinage de ladite extrémité reposant au sol (3).

2. Ensemble (1) de collecte de déchets selon la revendication 1, dans lequel ledit conteneur d'apport volontaire comprend une pluralité de paroi latérales externes (101-104), chaque paroi latérale externe (101-104) reposant à une extrémité au sol (3), caractérisé en ce l'ensemble de collecte (1) comprend, pour chaque paroi latérale externe (101-104) un moyen d'acquisition d'images (111-114) fixé à la paroi latérale externe associée (101-104), chaque moyen d'acquisition d'images (111-114) étant adapté pour capter des images d'une zone du sol (3) au voisinage de ladite extrémité respective reposant au sol (3) de ladite paroi latérale externe (111-114) associée.

3. Ensemble (1) de collecte de déchets selon la revendication 2, **caractérisé en ce que** ledit dispositif de détection (20,21) comprend des moyens (20) de :
- recomposition d'une image unique d'ensemble de la zone alentour du conteneur d'apport volontaire (10, 10', 10") à partir des images captées par chaque moyen d'acquisition d'images (111-114) sensiblement à un même instant d'acquisition; et
- de reconnaissance dans ladite image unique d'au moins un déchet (50).

4. Ensemble (1) de collecte de déchets selon la revendication 1 à 3, **caractérisé en ce que** ledit dispositif de détection (20, 21) comprend un terminal distant (20) et un concentrateur (21), ledit concentrateur (21) étant installé dans ledit conteneur d'apport volontaire (10, 10', 10") et étant adapté pour recevoir ladite au moins une image du moyen d'acquisition d'image (111-114) et à la transmettre, via un réseau de communication, audit terminal distant (20).

5. Ensemble (1) de collecte de déchets selon la revendication 1 à 3, **caractérisé en ce que** ledit dispositif de détection (20') est installé dans ledit conteneur d'apport volontaire (10'), ledit dispositif de détection (20') étant connecté à chaque moyen d'acquisition d'images (111'-113').

6. Procédé (30, 31, 3) de détection de déchets dans un ensemble (1) de collecte de déchets selon l'une quelconque des revendications 1 à 5, **caractérisé en ce qu'**il comprend des étapes de :
- Déclenchement (30) de l'acquisition d'au moins une image par au moins un moyen d'acquisition d'images ;
- Acquisition (31) de ladite image par ledit moyen d'acquisition d'images ;
- Détection (33) dans ladite image de la présence d'un déchet par le dispositif de détection ;
- Émission (34) d'un signal d'alerte lorsqu'un déchet est détecté dans ladite image.

7. Procédé (30, 31, 3) selon la revendication 6, **caractérisé en ce que** ladite étape de détection (33) comprend la mise en oeuvre d'un module d'apprentissage automatique supervisé de classification, entraîné en fonction d'une base de données d'entraînement comprenant des couples d'images prédéfinies associée chacune à une valeur d'indication de présence ou d'absence d'un déchet dans ladite image.

8. Procédé (30, 31, 3) selon la revendication 7 **caractérisé en ce que** ledit module d'apprentissage automatique comprend un réseau de neurone convolutif, comprenant :
- au moins une étape de convolution d'une image d'entrée ;
- au moins une étape de sous-échantillonnage de l'image calculée en sortie de l'étape de convolution ; et
- au moins une étape Entièrement Connectée, comprenant la mise en oeuvre d'un réseau de neurone artificiel, pour classifier l'image obtenue en sortie de l'étape de sous-échantillonnage.

9. Procédé (30, 31, 3) selon l'une quelconque des revendication 6 à 8, pour un ensemble selon l'une quelconque des revendications 2 ou 3 à 5 lorsqu'elles dépendent de la 2, **caractérisé en ce qu'**il comprend en outre une étape de reconstruction (32) d'une image unique en fonction de chaque image acquise par chaque moyen d'acquisition d'image ; ledit procédé de détection (33) étant mis en oeuvre en fonction de ladite image unique reconstruite.

## Patentansprüche

1. Abfallsammelanordnung (1), umfassend einen freiwilligen Sammelbehälter (10, 10', 10") zur Aufnahme von Abfall und mindestens ein Bilderfassungsmittel (111-114), das so positioniert und ausgerichtet ist, dass es mindestens ein Bild von mindestens einem Bereich des Bodens (3) in der Nähe des freiwilligen Sammelbehälters (10, 10', 10") erfassen kann, wobei die Anordnung (1) außerdem eine Erfassungsvorrichtung (20, 21) umfasst, die geeignet ist, mindestens ein Bild vom Bilderfassungsmittel (111-114) zu empfangen und das Vorhandensein von Abfall (50) auf dem Boden (3) in mindestens einem Bild zu erfassen;
der freiwillige Sammelbehälter (10, 10', 10") mindestens eine äußere Seitenwand (101-104) umfasst, die an einem Ende auf dem Boden (3) ruht, **dadurch gekennzeichnet, dass** das Bilderfassungsmittel (111-114) an der äußeren Seitenwand (101-104) so befestigt ist, dass es Bilder eines Bereichs des Bodens (3) in der Nähe des auf dem Boden ruhenden Endes (3) erfasst.

2. Abfallsammelanordnung (1) nach Anspruch 1, wobei der freiwillige Sammelbehälter eine Vielzahl von äußeren Seitenwänden (101-104) umfasst, wobei jede äußere Seitenwand (101-104) an einem Ende auf dem Boden (3) ruht, **dadurch gekennzeichnet, dass** die Sammelanordnung (1) für jede äußere Seitenwand (101-104) ein Bilderfassungsmittel (111-114) umfasst, das an der zugehörigen äußeren Seitenwand (101-104) befestigt ist, wobei jedes Bilderfassungsmittel (111-114) zum Erfassen von Bildern eines Bereichs des Bodens (3) in der Nähe des jeweiligen auf dem Boden liegenden Endes (3) der zugehörigen äußeren Seitenwand (111-114) ausgelegt ist.

3. Abfallsammelanordnung (1) nach Anspruch 2, **dadurch gekennzeichnet, dass** die Erfassungsvorrichtung (20,21) Mittel (20) umfasst zum:
- Zusammensetzen eines einzelnen Gesamtbildes des Bereichs um den freiwilligen Sammelbehälter (10, 10', 10") aus den Bildern, die von jedem Bilderfassungsmittel (111-114) im Wesentlichen zu einem gleichen Erfassungszeitpunkt erfasst werden; und
- um in dem Einzelbild mindestens einen Abfall (50) zu erkennen.

4. Abfallsammelanordnung (1) nach Anspruch 1 bis 3, **dadurch gekennzeichnet, dass** die Erfassungsvorrichtung (20, 21) ein entferntes Endgerät (20) und einen Konzentrator (21) umfasst, wobei der Konzentrator (21) in dem freiwilligen Sammelbehälter (10, 10', 10") installiert ist und dazu geeignet ist, mindestens ein Bild vom Bilderfassungsmittel (111-114) zu empfangen und es über ein Kommunikationsnetz an das entfernte Endgerät (20) zu übertragen.

5. Abfallsammelanordnung (1) nach Anspruch 1 bis 3, **dadurch gekennzeichnet, dass** die Erfassungsvorrichtung (20') in dem freiwilligen Sammelbehälter (10') installiert ist, wobei die Erfassungsvorrichtung (20') mit jedem Bilderfassungsmittel (111'-113') verbunden ist.

6. Verfahren (30, 31, 3) zum Erkennen von Abfall in einer Abfallsammelanordnung (1) nach einem der Ansprüche 1 bis 5, **dadurch gekennzeichnet, dass** es die folgenden Schritte umfasst:
- Auslösen (30) der Erfassung von mindestens einem Bild durch mindestens ein Bilderfassungsmittel;
- Erfassen (31) des Bildes durch das Bilderfassungsmittel;
- Erkennen (33) des Vorhandenseins von Abfall im Bild durch die Erfassungsvorrichtung;
- Senden (34) eines Warnsignals, wenn im genannten Bild Abfall erkannt wird.

7. Verfahren (30, 31, 3) nach Anspruch 6, **dadurch gekennzeichnet, dass** der Erfassungsschritt (33) die Implementierung eines überwachten automatischen Lernmoduls für die Klassifizierung umfasst, das auf der Grundlage einer Trainingsdatenbank trainiert wird, die Paare von vordefinierten Bildern enthält, die jeweils einem Wert zugeordnet sind, der auf das Vorhandensein oder Fehlen von Abfall im Bild hinweist.

8. Verfahren (30, 31, 3) nach Anspruch 7, **dadurch gekennzeichnet, dass** das automatische Lernmodul ein gefaltetes neuronales Netz umfasst, das Folgendes umfasst:
- mindestens einen Schritt des Faltens eines Eingabebildes;
- mindestens einen Schritt des Unterabtastens des berechneten Bildes am Ausgang des Faltungsschritts; und
- mindestens einen vollständig verbundenen Schritt, der die Implementierung eines künstlichen neuronalen Netzes umfasst, um das Bild zu klassifizieren, das als Ergebnis des Unterabtastungsschritts erhalten wurde.

9. Verfahren (30, 31, 3) nach einem der Ansprüche 6 bis 8 für eine Anordnung nach einem der Ansprüche 2 oder 3 bis 5, wenn sie von 2 abhängen, **dadurch gekennzeichnet, dass** es ferner einen Schritt der Rekonstruktion (32) eines Einzelbildes in Abhängigkeit von jedem erfassten Bild 15 durch jedes Bilderfassungsmittel umfasst; wobei das Erfassungsverfahren (33) in Abhängigkeit vom rekonstruierten Einzelbild durchgeführt wird.

## Claims

1. A waste collection assembly (1), comprising a voluntary disposal container (10, 10', 10") for receiving waste and at least one image acquisition means (111-114) positioned and oriented so as to be able to capture at least one image of at least one area of the ground (3) in the vicinity of the said voluntary disposal container (10, 10', 10"),
said assembly (1) further comprising a detection device (20,21) able to receive said at least one image from the image acquisition means (111-114) and to detect in said at least one image the presence of waste (50) on the ground(3);
said voluntary disposal container (10, 10', 10") comprises at least one outer side wall (101-104) resting at one end on the ground (3), **characterised in that** the said image acquisition means (111-114) is fixed to the said outer side wall (101-104) so as to capture images of an area of the ground (3) in the vicinity of the said end resting on the ground (3).

2. A waste collection assembly (1) according to claim 1, wherein said voluntary disposal container comprises a multitude of outer side walls (101-104), each outer side wall (101-104) resting at one end on the ground (3), **characterised in that** the collection assembly (1) comprises, for each outer side wall (101-104), image acquisition means (111-114) attached to the associated outer side wall (101-104), each image acquisition means (111-114) being adapted to capture images of an area of the ground (3) in the vicinity of said respective end resting on the ground (3) of said associated outer side wall (111-114).

3. A waste collection assembly (1) according to claim 2, **characterised in that** the said detection device (20,21) comprises means (20) of:
- recomposition of a single overall image of the area around the voluntary disposal container (10, 10', 10") from the images captured by each image acquisition means (111-114) substantially at the same acquisition time; and
- recognition in said single image of at least one waste item (50).

4. A waste collection assembly (1) according to claim 1 to 3, **characterised in that** said detection device (20, 21) comprises a remote terminal (20) and a concentrator (21), said concentrator (21) being installed in said waste collection container (10, 10', 10") and being adapted to receive said at least one image from the image acquisition means (111-114) and to transmit it, via a communication network, to said remote terminal (20).

5. A waste collection assembly (1) according to claim 1 to 3, **characterised in that** the said detection device (20') is installed in the said voluntary disposal container (10'), the said detection device (20') being connected to each image acquisition means (111'-113').

6. A method (30, 31, 3) of detecting waste in a waste collection assembly (1) according to any one of claims 1 to 5, **characterised in that** it comprises the steps of:
- Triggering (30) of the acquisition of at least one image by at least one image acquisition means;
- Acquisition (31) of said image by said image acquisition means;
- Detection (33) in said image of the presence of waste by the detection device;
- Emission (34) of an alert signal when waste is detected in said image.

7. A method (30, 31, 3) according to claim 6, **characterised in that** the said detection step (33) comprises the implementation of a supervised automatic classification learning module, trained as a function of a training database comprising pairs of predefined images each associated with a value indicating the presence or absence of waste in the said image.

8. A method (30, 31, 3) according to claim 7, **characterised in that** the said automatic learning module comprises a convolutional neural network, comprising:
- at least one step of convolving an input image;
- at least one step of sub-sampling the image calculated at the output of the convolution step; and
- at least one Fully Connected step, comprising the implementation of an artificial neural network, to classify the image obtained at the output of the sub-sampling step.

9. A method (30, 31, 3) according to any one of claims 6 to 8, for an assembly according to any one of claims 2 or 3 to 5 where they depend on claim 2, **characterised in that** it further comprises a stage of reconstruction (32) of a single image as a function of each image acquired 15 by each image acquisition means; said detection method (33) being implemented as a function of said reconstructed single image.
